# EUROPÄISCHE PATENTSCHRIFT

(11) **EP 0 319 914 B1**
(45) Veröffentlichungstag und Bekanntmachung des Hinweises auf die Patenterteilung: **27.04.1994**
(21) Anmeldenummer: 88120359.0
(22) Anmeldetag: 06.12.1988
(51) Int. Cl.: B23Q 3/00

(54) **Werkzeugmagazin**
Tool magazine
Etagère pour outils

(30) Priorität: 11.12.1987 DE 3742096
(43) Veröffentlichungstag der Anmeldung: 14.06.1989
(73) Patentinhaber: DÖRRIES SCHARMANN GmbH, D-41236 Mönchengladbach (DE)
(72) Erfinder: Reuter, Wolfgang, D-5276 Wiehl (DE); Kessler, Kurt, D-8013 Haar (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- CH-A- 623 257
- DD-A- 86 547
- DE-A- 1 602 798
- DE-A- 2 737 225
- DE-A- 3 440 604
- JP-A-59 166 137
- US-A- 3 339 273
- US-A- 4 658 493
- US-A- 4 701 994

## Beschreibung

Die Erfindung betrifft eine Kombination aus Werkzeugmagazin und Werkzeugen, bestehend aus mehreren, Aufnahmen für Werkzeuge und Tastköpfe aufweisenden Trägereinheiten, die unter Ausbildung einer ebenen, vertikalen Regalstruktur in einem Basisträger angeordnet sind, sowie einer zugeordneten steuerbaren Werkzeug-Transportvorrichtung, die eine parallel und senkrecht zur Basisträgerebene bewegbare Greiferanordnung umfaßt, wobei die im Basisträger angeordneten Trägereinheiten Werkzeugaufnahmen aufweisen, die an einem horizontal verlaufenden Kantenabschnitt der jeweiligen Trägereinheit als im wesentlichen U-förmige Aussparungen ausgebildet sind, wobei die Transportvorrichtung mit den Werkzeugmagazin verbunden und in einer ersten Richtung parallel zur Basisträgerebene verfahrbar ist und wobei die Greiferanordnung in einer zweiten Richtung parallel zur Basisträgerebene sowie senkrecht dazu verfahrbar ist, so daß die Greiferanordnung zwischen den Werkzeugaufnahmen und wenigstens einer Werkzeugübergabeposition zur Entnahme und Rückführung von Werkzeugen bewegbar ist.

Eine derartige Kombination ist aus der JP-A-59-166 137 bekannt. Dabei sind im Werkzeugmagazin mehrere Trägereinheiten übereinander angeordnet, wobei die Werkzeuge in den Trägereinheiten mit ihren Schneiden nach oben stehend abgelegt sind.

Wird bei dieser bekannten Kombination aus Werkzeugmagazin und Werkzeugen ein aus der Bearbeitungsmaschine kommendes Werkzeug, das noch mit Bearbeitungsspänen und Bearbeitungsflüssigkeit behaftet sein kann, im Werkzeugmagazin abgelegt, so fließt die noch vorhandene Bearbeitungsflüssigkeit am Werkzeug herunter auf den Aufnahmeabschnitt des Werkzeugs, d.h. auf den Konus, auf den auch noch vorhandene Späne aus dem Schneidenbereich gelangen können. Solche am Konus anhaftende Fremdkörper können bei einem späteren Gebrauch des Werkzeugs Störungen beim Einsetzen des Werkzeugs in die Werkzeugmaschine verursachen. Außerdem können von Bearbeitungsflüssigkeit mitgenommene Späne und Schmutzteile auch auf ein jeweils daruntergelegenes Werkzeug im Magazin tropfen und dieses Werkzeug verschmutzen, was beim späteren Gebrauch dieses Werkzeugs ebenfalls Probleme verursachen kann.

Aufgabe der Erfindung ist es, eine Kombination von Werkzeugmagazin und Werkzeugen der gattungsgemäßen Art derart weiterzubilden, daß Werkzeugwechselvorgänge schneller und zuverlässiger erfolgen können und die Betriebssicherheit erhöht wird.

Diese Aufgabe wird gemäß Anspruch 1 dadurch gelöst, daß die Werkzeuge mit dem Bearbeitungskopf nach unten hängend in den Aufnahmen gehaltert sind und daß unterhalb der Werkzeughalterungen der jeweiligen Trägereinheit ein Tropfschutzblech vorgesehen ist.

Durch die hängende Halterung der Werkzeuge und die Anbringung eines Tropfschutzbleches unterhalb der Werkzeughalterungen wird sichergestellt, daß keine gegenseitige Verschmutzung von übereinander in Werkzeugaufnahmen gehalterten Werkzeugen erfolgt und an Werkzeugen anhaftende Flüssigkeit bzw. dort haftende Späne direkt nach unten auf das Tropfschutzblech fallen können, ohne dabei den eigenen Konus des betreffenden Werkzeugs zu verschmutzen. Auf diese Weise ist gewährleistet, daß das Werkzeug bei einem späteren Gebrauch ohne Fremdkörper am Konus zur Bearbeitungsmaschine gelangt und problemlos eingesetzt werden kann.

Der Basisträger besteht bevorzugt aus einem geschlossenem Rahmen mit Horizontal- und Vertikalstreben, in dem die modulartig ausgebilden Trägereinheiten positionsgenau fixiert sind und aufgrund dieser modulartigen Ausbildung ein Wechseln bestimmter Gruppen von Werkzeugen ermöglichen. Möglich ist es auch, die gesamte Trägereinheit auswechselbar auszubilden und dazu den rahmenförmigen Basisträger mit seinen horizontalen Rahmenteilen in Führungen zu haltern. Auf diese Weise kann die Gesamtheit der im Basisträger aufgenommenen Werkzeuge entsprechend der jeweiligen Bearbeitungsaufgabe ausgewechselt werden, indem der Basisträger aus seinen Führungen gezogen und beispielsweise in entsprechende Führungen auf einem Transportwagen überführt wird und anschließend von einem Transportwagen ein anderer Basisträger mit neuen oder anderen Werkzeugen in die der Bearbeitungsmaschine zugeordneten Führungen eingebracht und darin wiederum positionsgenau fixiert wird, so daß die einzelnen Werkzeugaufnahmepositionen wiederum exakt und definiert von der Transportvorrichtung angefahren werden können.

Eine besonders große Anzahl von Werkzeugen kann in Verbindung mit einer einzigen Transportvorrichtung dann im Magazin gespeichert werden, wenn zwei zueinander parallele, mit Trägereinheiten bestückte Basisträger vorgesehen werden und die Transportvorrichtung zwischen diesen beiden Basisträgern und in einer zu diesen parallelen Ebenen verfahrbar ist, wobei als Greiferanordnung ein Doppelgreifer oder ein um zumindest 180° schwenkbarer Greifer vorgesehen ist, so daß es möglich ist, die Trägereinheiten beider Basisträger mit der gleichen Transportvorrichtung anzufahren und über den Greifer je nach Fall eine Werkzeugaufnahme im einen oder anderen Basisträger zu bedienen.

Nach einer besonders einfachen, stabilen und gleichzeitig flexiblen Ausführungsvariante der Erfindung ist als Basiseinheit ein C-förmiger Träger vorgesehen, mit dem die Transportvorrichtung direkt über die horizontalen Schenkel gekoppelt bzw. fest verbunden ist. Die Relativlage von Basisträger und Transportvorrichtung ist damit eindeutig vorgegeben, und es ist vor allem für die Transportvorrichtung keine eigene Tragekonstruktion erforderlich, da diese Funktion vom Basisträger übernommen wird.
In horizontalen Führungsschienen sind dabei Werkzeugträgerkassetten horizontal verschiebbar gelagert und positioniert, so daß eine Bestückung des Trägergestells nach den jeweiligen Erfordernissen erfolgen kann. Die Bestückung dieser speziell ausgebildeten Basiseinheit kann ganz einfach über einen Hubwagen erfolgen, der mit entsprechenden Führungen ausgestattet ist und durch einen Hebe- bzw. Senkvorgang eine gegenseitige Ausrichtung der Führungen im Basisträger mit der jeweiligen Führung am Hubwagen gestattet.

Wenn in einem Zentrallager wiederum entsprechende Regale mit korrespondierenden Führungen vorgesehen sind, dann wird einerseits eine platzsparende und problemfreie Lagerung der Trägerkassetten im Zentrallager ermöglicht und andererseits ein besonders einfacher und unkomplizierter Transport zwischen Zentrallager und Basisträger über einen entsprechenden Transportwagen ermöglicht.

Die Trägerkassetten lassen sich besonders wirtschaftlich aus Endlosblech biegen, wobei ohne Probleme die erforderlichen Genauigkeiten erzielt werden können. Durch die Anbringung eines Tropfschutzblechs unterhalb der Werkzeughalterungen wird sichergestellt, daß keine Verschmutzung von übereinander angeordneten Werkzeugaufnahmen erfolgt.

Von besonderem Vorteil ist es, in die Regalstruktur eine Werkzeugprüfstation zu integrieren, so daß eine Werkzeugkontrolle, insbesondere Bruchkontrolle, im Werkzeugmagazin durchgeführt werden kann. Die Bearbeitungsmaschine selbst muß daher nicht mehr zu einer Prüfstation fahren, wodurch Arbeitszeit gespart wird. Da sich die Prüfstation dabei auch nicht mehr im Arbeitsraum befindet, ist jedgliche Verschmutzungsproblematik der erforderlichen Sensoren beseitigt. Der Prüfvorgang selbst wird in der Weise ausgeführt, daß die das jeweilige Werkzeug von dem Werkzeugübergabebereich zu seinem Magazinplatz überführende Transportvorrichtung in definierter Weise an entsprechenden Sensoren der Prüfstation vorbeigeführt und dabei die erforderliche Messung durchgeführt wird.

Nach einer vorteilhaften Ausgestaltung der Erfindung ist ein vorgebbarer Bereich des Basisträgers zur Aufnahme von Trägereinheiten für verschlissene, einzuschleusende und auszuschleusende Werkzeuge bestimmt, und dieser Bereich befindet sich zweckmäßigerweise an dem von der Bearbeitungsmaschine abgewandten Ende des Werkzeugmagazins, so daß er auch manuell zugänglich ist. Dabei ist im unteren Eckbereich zweckmäßigerweise ein Werkzeugträger für die verschlissenen Werkzeuge angeordnet, oberhalb dieses Werkzeugträgers befindet sich ein zweiter Werkzeugträger für einzuschleusende Werkzeuge und über diesem ist wiederum ein Werkzeugträger für die auszuschleusenden Werkzeuge vorgesehen.
Das Ein- und Aussortieren erfolgt dabei mit der Transportvorrichtung, die auch zur Handhabung der Werkzeuge zwischen den Magazinplätzen und dem der Bearbeitungsmaschine zugeordneten Werkzeugwechsler dient. Für die Zeit der Ein- und Ausgabe von Werkzeugen, die auch manuell durchführbar ist, wird dieser spezielle Bereich des Werkzeugmagazins durch Schutzeinrichtungen gesperrt.
Um eine Automatisierung des Vorgangs des Ein- und Ausladens dieser speziellen Werkzeugträger zu gestattten, können diese drei übereinander angeordneten Werkzeugträger als Regalteil ein- und ausfahrbar bzw. ein- und ausschwenkbar ausgebildet werden.

Es ist aber nicht nur die zum Wechseln des Basisträgers bzw. Grundgestells und damit des gesamten Werkzeugmagazins erforderliche Zeit gering, sondern es lassen sich bei dem Magazin nach der Erfindung auch ungewöhnlich kurze Werkzeugwechselzeiten erreichen, da die Greiferanordnung der Transportvorrichtung jeweils auf dem kürzest möglichen Weg zwischen der jeweils anzusteuernden Werkzeugaufnahme und einer definierten Werkzeugübergabeposition verfahren werden kann.

Von besonderem Vorteil im Zusammenhang mit der Erfindung ist ferner, daß die einzelnen Trägereinheiten jeweils so ausgebildet sein können, daß sie schubkastenartig in den jeweils zugehörigen Basisträger einschiebbar und im Basisträger positionsgenau fixierbar sind. Auf diese Weise läßt sich das Magazin einerseits hinsichtlich der Anzahl der aufzunehmenden Werkzeuge schnell und problemfrei den jeweiligen Bedürfnissen anpassen, und andererseits ist es möglich, bestimmten Bereichen des gesamten Magazins zugeordnete Einzelmodule separat und schnell auszuwechseln, in denen wiederum bestimmte Werkzeugarten zusammengefaßt sind, welche beispielsweise eine geringere Standzeit als die üblichen Werkzeuge im gesamten Magazin besitzen und daher häufiger gewechselt werden müssen.

Die vertikal gegenseitig ausgerichteten Werkzeughalterungen der einzelnen Trägereinheiten sind mit vorzugsweise aus Kunststoff bestehenden Aufnahme- und Positionierelementen versehen, welche eine Vertikalhalterung der Werkzeuge gewährleisten und einen im Zusammenhang mit den Werkzeugwechselvorgängen möglichen Werkzeugverschleiß verhindern. Diese Aufnahme- und Positionierelemente können aus hufeisenförmigen Kunststoffteilen bestehen, die auf den jeweiligen Randbereich einer insbesondere etwa halbkreisförmigen Ausnehmung aufschnappbar und damit auch auswechselbar sind.

Aufgrund der mittels des Werkzeugmagazins nach der Erfindung erzielbaren kurzen Werkzeugwechselzeiten ist es prinzipiell möglich, aus diesem Werkzeugmagazin zwei benachbarte Bearbeitungsmaschinen mit Werkzeugen zu bedienen, was sowohl mittels einer einzigen, von der Transportvorrichtung und einem Werkzeugwechsler anfahrbaren Wechselposition als auch unter Verwendung von zwei an die jeweils optimale Position verlegte Wechselpositionen erfolgen kann, da die Wahl der jeweiligen Wechselposition die Werkzeugwechselzeiten praktisch nicht beeinflußt.

Das regalartig aufgebaute Werkzeugmagazin nach der Erfindung eignet sich auch sehr vorteilhaft als Werkzeugspeicher im jeweiligen Werkzeuglager, und es ist aufgrund der Grundkonzeption dieses Werkzeugmagazins auch ohne Schwierigkeiten möglich, eine automatische Bestückung des jeweiligen Magazins vorzunehmen, wozu sich eine Transportvorrichtung eignet, die analog derjenigen Transportvorrichtung ausgebildet ist, die im unmittelbaren Einsatz des Werkzeugmagazins verwendet wird.
Ausführungsbeispiele der Erfindung werden nachfolgend unter Bezugnahme auf die Zeichnung erläutert; in der Zeichnung zeigt:
- Fig. 1: eine schematische Frontdarstellung eines regalartig aufgebauten Werkzeugmagazins nach der Erfindung,
- Fig. 2: eine schematische perspektivische Darstellung einer Ausführungsvariante eines Werkzeugmagazins von der in Fig. 1 gezeigten Art, und
- Fig. 3: eine schematische perspektivische Darstellung einer Werkzeugträgerkassette zur Verwendung in den Magazinen nach den Fig. 1 und 2.

Die vertikalen Abstände der in Vertikalrichtung bei allen Ausführungsvarianten bevorzugt gegenseitig ausgerichteten Werkzeugaufnahmen sind den in der Praxis vorkommenden Werkzeuglängen angepaßt und können somit auch unterschiedlich gewählt werden, um eine optimale Packungsdichte der im Magazin zu speichernden Werkzeuge zu gewährleisten.

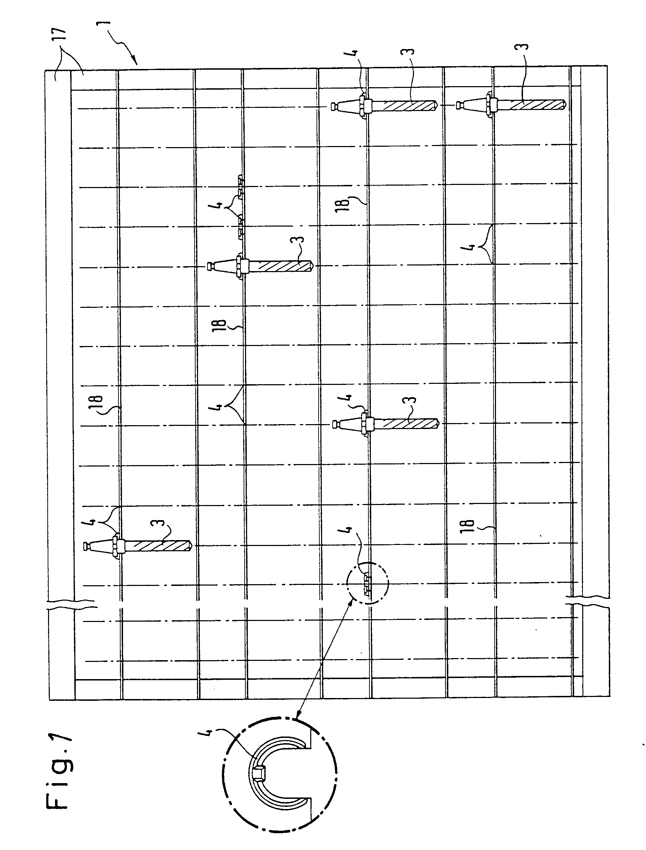

Fig. 1 zeigt eine bevorzugte Ausführungsvariante der Erfindung, gemäß der das Werkzeugmagazin regalartige Struktur besitzt, so daß in einer Vertikalebene eine Vielzahl einzelner Werkzeuge nebeneinander und übereinander angeordnet werden und eine in Horizontal- und Vertikalrichtung verfahrbare Transportvorrichtung eine Greiferanordnung in einer zur Vertikalebene parallelen Ebene bewegen kann. Die Greiferanordnung muß dann nur noch eine Hubbewegung senkrecht zur Regalebene durchführen, um das jeweilige Werkzeug 3 ergreifen und entnehmen bzw. wieder ablegen zu können.

Der Basisträger 1 besteht dabei vorzugsweise aus einem stabilen, in sich geschlossenen Rahmen 17, innerhalb dessen Trägereinheiten 18 fest oder auswechselbar angeordnet sind. Jede der Trägereinheiten 18 ist mit einer Mehrzahl von Werkzeughalterungen 4 versehen.

Die Gesamt-Regalstruktur kann auch aus einzelnen Teilstrukturen aufgebaut sein, um die Gesamtspeicherkapazität des Magazins den jeweiligen Erfordernissen einfach anpassen zu können.

Die Variabilität hinsichtlich des Aufbaus dieser Vertikalregalstruktur stellt sicher, daß allen in der Praxis relevanten Bedingungen Rechnung getragen werden kann, und zwar beispielsweise durch Auswechselbarkeit einzelner, insbesondere auch verschieden ausgebildeter Module oder Ebenen.

Eine besonders hohe Speicherkapazität wird dann erzielt, wenn zwei Basisträger parallel zueinander und mit vergleichsweise geringem gegenseitigem Abstand angeordnet werden und diesen beiden Basisträgern eine einzige, zwischen den Basisträgerebenen verfahrbare Transportvorrichtung zugeordnet wird. Die Greiferanordnung kann dabei als Doppelgreifer oder als Normalgreifer in Verbindung mit einer Dreheinheit ausgeführt sein.

Der regalartig ausgebildete Basisträger kann als Gesamtheit ausgewechselt werden, wozu zweckmäßigerweise der untere und der obere Horizontalschenkel des Rahmens in geeigneten Führungen, insbesondere Rollenführungen gehaltert und positioniert ist, so daß dieser Rahmen aus seiner Führung gezogen und in eine entsprechende Führung auf einem Transportwagen überführt werden kann. Anschließend ist eine sofortige Einführung eines mit neuen bzw. anderen Werkzeugen bestückten Basisträgers durchführbar.

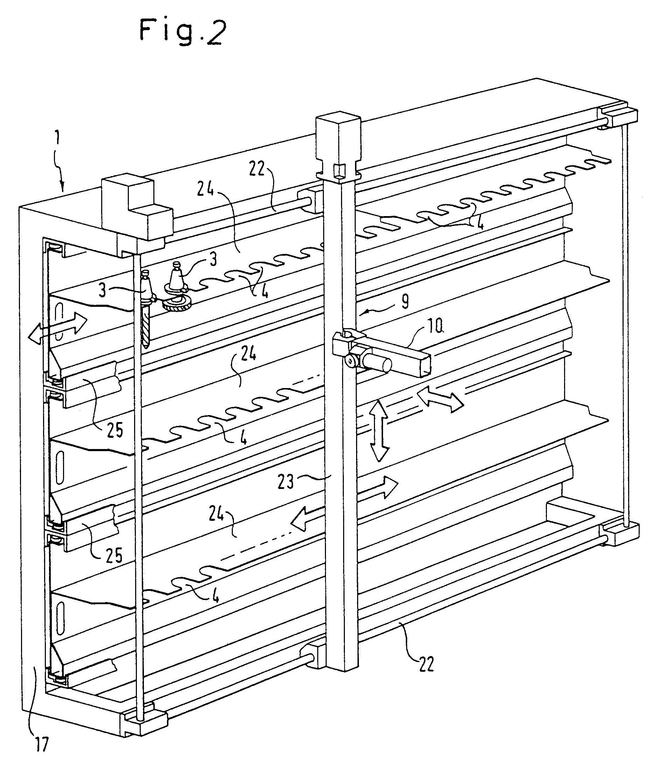

Fig. 2 zeigt in schematischer, perspektivischer Darstellung eine Ausführungsvariante des Magazins nach Fig. 1. Dabei ist der Basisträger 1 in Form eines C-förmigen Rahmens ausgebildet, wobei an den horizontal verlaufenden Schenkeln die Transportvorrichtung 9 befestigt ist, so daß für diese Transportvorrichtung 9 keine besondere Trägereinheit benötigt wird. Die Transportvorrichtung 9 besteht aus oberen und unteren Horizontalführungen 22 sowie einer dazwischen angeordneten Vertikalführung 23, an der die verfahrbare Greiferanordnung 10 angebracht ist. Die Bewegungsmöglichkeiten sind durch Pfeile angedeutet.

An den vertikalen Rahmenteilen 17 sind beispielsweise U-förmig ausgebildete Kassettenführungen 25 befestigt, die zur Aufnahme von Werkzeugträgerkassetten 24 dienen. Diese Werkzeugträgerkassetten 24 sind bezüglich der Führungen 25 über Wälzelemente, Rollen, Kugeltöpfen und dergleichen abgestützt und vorzugsweise über diese Elemente auch justierbar.
Diese Werkzeugträgerkassetten 24 können in den Führungen 25 horizontal verschoben und in jeweils vorgegebene Positionen gebracht werden, wo sie in entsprechende, insbesondere auch federnd ausgebildete Aufnahmen einrasten, von denen sie auch wiederum leicht lösbar sind.

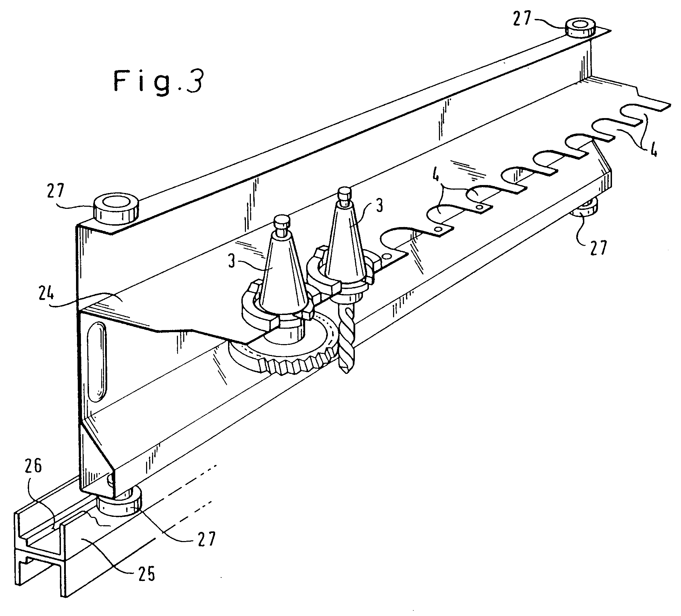

Fig. 3 zeigt eine besonders vorteilhafte Ausführungsform einer Werkzeugträgerkassette 24, die aus einem Endlosblech gebogen ist. Durch den Biegevorgang ergibt sich eine C-förmige Struktur, wobei an den beiden außenliegenden Schenkeln Stütz- bzw. Führungsrollen 27 gelagert sind, über die auch eine Justierung der Kassette bezüglich der zugeordneten Führung möglich ist. Durch die rückgebogenen Teile und die doppelwandige Ausbildung des mittleren Bereichs der Kassette wird eine sehr stabile und verwindungsfreie Konstruktion erhalten. Die Werkzeugaufnahmen 4 sind in einem horizontal verlaufenden freien Endabschnitt des Endlosbleches ausgebildet, der etwa mittig oder im oberen Drittel der C-Struktur gelegen ist.
In der Kassettenführung 25 ist für die Rollen 27 der Trägerkassetten 24 eine Abstützwand 26 ausgebildet, aber es ist darauf hinzuweisen, daß prinzipiell eine Vielzahl anderer Ausführungsvarianten hinsichtlich der Abstützung und Führung der Kassette bezüglich der Trägerführungen möglich ist und insbesondere dazu auch Kugeltöpfe verwendet werden können.

In der praktischen Nutzung der Ausgestaltungen von Werkzeugmagazinen nach der Erfindung ist von Vorteil, daß die Bestückung des jeweiligen Magazins entfernt von der Bearbeitungsmaschine erfolgen und das insgesamt bestückte Magazin dann in die Arbeitsposition gebracht, d.h. relativ zur Transportvorrichtung positionsgenau fixiert werden kann, so daß die programmierte Transportvorrichtung die jeweils benötigten Werkzeuge durch Hub- und Schwenkbewegungen entnehmen und in die Werkzeugübergabeposition bringen kann, wo sie mittels eines Werkzeugwechslers zur zugehörigen Arbeitsspindel gebracht werden.
Der Magazinwechsel kann stets innerhalb kurzer Zeit durchgeführt werden, so daß dann sofort wieder eine große Anzahl neuer oder anderer Werkzeuge zur Verfügung steht und damit die Maschinenrüstzeiten minimiert werden.

## Patentansprüche

1. Kombination aus Werkzeugmagazin und Werkzeugen, bestehend aus mehreren, Aufnahmen für Werkzeuge und Tastköpfe aufweisenden Trägereinheiten, die unter Ausbildung einer ebenen, vertikalen Regalstruktur in einem Basisträger (1) angeordnet sind, sowie einer zugeordneten steuerbaren Werkzeug-Transportvorrichtung, die eine parallel und senkrecht zur Basisträgerebene bewegbare Greiferanordnung umfaßt, wobei die im Basisträger (1) angeordneten Trägereinheiten (18) Werkzeugaufnahmen (4) aufweisen, die an einem horizontal verlaufenden Kantenabschnitt der jeweiligen Trägereinheit (18) als im wesentlichen u-förmige Aussparungen ausgebildet sind, wobei die Transportvorrichtung (9) mit dem Werkzeugmagazin verbunden und in einer ersten Richtung parallel zur Basisträgerebene verfahrbar ist und wobei die Greiferanordnung (10) in einer zweiten Richtung parallel zur Basisträgerebene sowie senkrecht dazu verfahrbar ist, so daß die Greiferanordnung (10) zwischen den Werkzeugaufnahmen und wenigstens einer Werkzeugübergabeposition zur Entnahme und Rückführung von Werkzeugen (3) bewegbar ist,
dadurch **gekennzeichnet,**
daß die Werkzeuge (3) mit dem Bearbeitungskopf nach unten hängend in den Aufnahmen (4) gehaltert sind und daß unterhalb der Werkzeughalterungen (4) der jeweiligen Trägereinheit (18) ein Tropfschutzblech vorgesehen ist.

2. Kombination nach Anspruch 1,
dadurch **gekennzeichnet,**
daß der Basisträger (1) aus einem geschlossenen Rahmen (17) mit Horizontal- und Vertikalstreben besteht, in dem die Trägereinheiten (18) positionsgenau fixierbar und modulartig auswechselbar sind.

3. Kombination nach Anspruch 1 oder 2,
dadurch **gekennzeichnet,**
daß der rahmenförmige Basisträger (1) als Gesamtheit auswechselbar ausgebildet und dazu mit seinen horizontalen Rahmenteilen in Führungen gehaltert ist.

4. Kombination nach Anspruch einem der vorhergehenden Ansprüche,
dadurch **gekennzeichnet,**
daß zwei gegenseitig beabstandete und zueinander parallele, mit Trägereinheiten (18) bestückte Basisträger (1) vorgesehen sind und daß die Transportvorrichtung (9) zwischen diesen beiden Basisträgern verfahrbar ist, wobei als Greiferanordnung ein Doppelgreifer oder ein um zumindest 180° schwenkbarer Greifer vorgesehen ist.

5. Kombination nach einem der vorhergehenden Ansprüche,
dadurch **gekennzeichnet,**
daß der Basisträger (1) aus einem C-förmigen Rahmen (17) besteht, an dessen horizontalen Schenkeln die Transportvorrichtung (9) verschiebbar gelagert ist und an dessen vertikalen Rahmenteilen (17) Führungen (25) zur Aufnahme von Werkzeugträgerkassetten (24) angebracht sind.

6. Kombination nach Anspruch 5,
dadurch **gekennzeichnet,**
daß jede Werkzeugträgerkassette (24) aus Endlosblech gebogen ist, im Vertikalschnitt eine C-förmige Außenkontur besitzt und die Werkzeughalterungen (4) in einem bezüglich der Kassette etwa mittig gelegenen, horizontal verlaufenden Endabschnitt des Bleches ausgebildet sind.

7. Kombination nach einem der Ansprüche 5 oder 6,
dadurch **gekennzeichnet,**
daß jede Trägerkassette (24) bezüglich der ihr zugeordneten Führungen (25) über Roll- und/oder Gleitelemente abgestützt und insbesondere über diese Elemente justierbar ist.

8. Kombination nach einem der vorhergehenden Ansprüche,
dadurch **gekennzeichnet,**
daß in die Regalstruktur, insbesondere im Werkzeugübergabebereich, eine definiert und fest positionierte Werkzeugprüfstation integriert ist, in der mittels stationärer Sensoren zumindest die Länge des jeweiligen Werkzeugs während des Vorbeibewegens mittels der Transportvorrichtung (9) bestimmbar ist.

9. Kombination nach einem der vorhergehenden Ansprüche,
dadurch **gekennzeichnet,**
daß in die Regalstruktur eine insbesondere fest positionierte Ladestation für mit Akkumulatoren ausgestattete Meß- oder Prüforgane, wie z. B. Meßtaster, integriert ist, und daß die Meß- oder Prüforgane im Zustand der Halterung in den Aufnahmen (4) mit einer elektrischen Ladeschaltung gekoppelt sind.

10. Kombination nach einem der Ansprüche 5 bis 9,
dadurch **gekennzeichnet,**
daß die Trägerkassetten (24) durch Horizontalverschiebung, insbesondere mittels der Transportvorrichtung (9), in entsprechende Aufnahmeführungen eines andockbaren und verfahrbaren Hubwagens überführbar sind und daß die Aufnahmeführungen des Hubwagens vertikal verfahrbar und mit den Führungen (25) im Basisträger (1) ausrichtbar sind.

11. Kombination nach einem der vorhergehenden Ansprüche,
dadurch **gekennzeichnet,**
daß zumindest ein vorgebbarer Bereich des Basisträgers (1) zur Aufnahme von Trägereinheiten (18) für verschlissene sowie einzuschleusende und auszuschleusende Werkzeuge (3) bestimmt ist, wobei dieser Bereich insbesondere an dem vom Werkzeugübergabebereich abgewandten Ende des Basisträgers (1) vorgesehen ist.

12. Kombination nach Anspruch 11,
dadurch **gekennzeichnet,**
daß individuelle Trägereinheiten (18) für verschlissene Werkzeuge, einzuschleusende Werkzeuge und auszuschleusende Werkzeuge im vom Werkzeugwechselbereich abgewandten unteren Eckbereich des Basisträgers (1) übereinander angeordnet und insbesondere als regalartige Untereinheit ein- und ausfahrbar bzw. ein- und ausschwenkbar ausgebildet sind.

13. Kombination nach einem der vorhergehenden Ansprüche,
dadurch **gekennzeichnet,**
daß der Basisträger (1) aus mehreren Einzeleinheiten besteht und über lösbare Steck- und Kuppelverbindungen entsprechend der geforderten Gesamtgröße zusammensetzbar ist.

14. Kombination nach einem der vorhergehenden Ansprüche,
dadurch **gekennzeichnet,**
daß der Basisträger (1) auf Rollen oder Rädern (6) gelagert, in ortsfesten Schienen (7) geführt und über Anschläge (8) oder dergleichen in einer vorgegebenen Position fixierbar ist und daß der Basisträger (1) mittels einer Fixiereinrichtung (15, 16) mit einem Bauteil (21) der zugehörigen Bearbeitungsmaschine kuppelbar und synchron verfahrbar ist.

15. Kombination nach einem der vorhergehenden Ansprüche,
dadurch **gekennzeichnet,**
daß die Aufnahmen (4) für die Werkzeuge (3), Tastköpfe und dergleichen insbesondere aus Kunststoff bestehende Aufnahme- und Positionierelemente aufweisen, die aus hufeisenförmigen Kunststoffteilen bestehen, die im Bereich der jeweiligen hufeisenförmigen Ausnehmung der Trägereinheit (18) auf diese aufschnappbar sind.

## Claims

1. Combination of tool magazines and tools comprising carrier units having a plurality of mounts for tools and sensing heads, with the carrier units being arranged in a base carrier (1) forming a planar vertical rack structure and also an associated controllable tool transport means which includes a gripper device movable parallel to and perpendicular to the base carrier plane, wherein the carrier units (18) arranged in the base carrier (1) have tool mounts (4) which are formed at a horizontally extending edge section of the respective carrier unit (18) as substantially U-shaped cut-outs, with the transport means (9) being connected to the tool magazine and being movable in a first direction parallel to the base carrier plane, and wherein the gripper device (10) is movable in a second direction parallel to the base carrier plane and also perpendicular thereto, so that the gripper arrangement (10) is movable between the tool mounts and at least one tool transfer position for the removal and return of tools 3, characterised in that the tool (3) are held in the mounts (4) with the working head hanging downward and in that a sheet metal drop protection tray (catch tray) is provided beneath the tool holders (4) of the respective carrier units.

2. Combination in accordance with claim 1, characterised in that the base carrier (1) comprises a closed frame (17) with horizontal and vertical struts in which the carrier units (18) are accurately fixable in position and are interchangeable in module-like manner.

3. Combination in accordance with claim 1 or claim 2, characterised in that the frame-like base carrier (1) is constructed to be interchanged as a whole and is for this purpose mounted with its horizontal frame parts in guides.

4. Combination in accordance with one of the preceding claims, characterised in that two mutually spaced apart and parallel base carriers (1) which are equipped with carrier units (18) are provided; and in that the transport means (9) is movable between these base carriers, with a double arm gripper or a gripper pivotable through at least 180° being provided as gripper device.

5. Combination in accordance with claim 1, characterised in that the base carrier (1) comprises a C-shaped frame (17) with the transport means (9) being displaceably mounted on its horizontal limbs and with guides (25) being mounted on its vertical frame part (17) to accommodate tool carrier cassettes (24).

6. Combination in accordance with claim 5, characterised in that each tool carrier cassette (24) is bent up from continuous sheet metal, and has a C-shaped outer contour in vertical section; in that the tool holders (4) are formed in a horizontally extending end portion of the piece of sheet metal which is disposed approximately at the center of the cassette.

7. Combination in accordance with one of claims 5 or 6, characterised in that each carrier cassette (24) is supported relative to the guides (25) associated therewith via rolling and/or sliding elements and is in particular adjustable via these elements.

8. Combination in accordance with one of the preceding claims, characterised in that a defined and fixedly positioned tool checking station is integrated into the rack structure, in particular in the tool transfer region, with at least the length of the respective tool being determinable by means of stationary sensors during the movement past the tool testing station by means of the transport means (9).

9. Combination in accordance with one of the preceding claims, characterised in that a charging station, in particular a fixedly positioned charging station, is integrated in the rack structure for receiving measurement or test devices equipped with accumulators, such as for example a measurement sensor, and in that the measurement or test devices are coupled, when in the state of being held in the mounts (4), with an electric charging circuit.

10. Combination in accordance with one of the claims 5 to 9, characterised in that the carrier cassettes (24) can be transferred by horizontal displacement, in particular by means of the transport device (9) into corresponding receiving guides of a dockable and movable lifting carriage; and in that the receiving guides of the lifting carriage are vertically movable and alignable with the guides (25) in the base carrier (1).

11. Combination in accordance with one of the preceding claims, characterised in that at least one predeterminable region of the base carrier (1) is intended for receiving worn tools and also for tools which are to be inserted or removed, with this region being provided in particular at the end of the base carrier (1) remote from the tool transfer region.

12. Combination in accordance with claim 11, characterised in that individual carrier units (18) for worn tools, tools which are to be inserted and tools which are to be removed are arranged above one another in the lower corner region of the base carrier (1) remote from the tool change region and are insertable and extractable, or pivotable into place and out of place, in particular in the form of a rack-like sub-unit.

13. Combination in accordance with one of the preceding claims, characterised in that the base carrier (1) comprises a plurality of individual units and can be assembled via releasable plug connections and coupling connections in accordance with the required overall size.

14. Tool magazine in accordance with one of the preceding claims, characterised in that the base carrier (1) is mounted on rollers or wheels (6), is guided in spatially fixedly positioned rails (7) and is fixable via abutments (8) or the like in a predetermined position; and in that the base carrier (1) can be coupled to and is synchronously movable with a component (21) of the associated machine tool by means of a fixing means (15, 16).

15. Combination in accordance with one of the preceding claims, characterised in that the mounts (4) for the tools (3) sensing heads and the like have receiving and positioning elements, in particular receiving and positioning elements of plastic which comprise horseshoe-like plastic parts which, in the region of the respective horseshoe-like cut-out of the carrier unit (18), can be snapped onto the latter.

## Revendications

1. Combinaison d'un magasin à outils et d'outils constituée de plusieurs unités supports qui présentent plusieurs moyens de réception pour des outils et des têtes de palpage et sont disposés dans un support de base (1) en formant une structure d'étagères verticale plane, ainsi que d'un dispositif de transport d'outils commandé associé qui comprend un système de pinces mobile parallèlement et perpendiculairement au plan du support de base, les unités supports (18) du support de base (1) présentant des moyens de réception d'outils (4) qui sont agencés sous forme d'évidements sensiblement en forme de U dans une partie horizontale de l'unité support (18) concernée, le dispositif de transport (9) étant lié au magasin à outils et pouvant se déplacer dans une première direction parallèlement au plan du support de base, et le système de pinces (10) pouvant se déplacer dans une deuxième direction parallèlement au plan du support de base et perpendiculairement à celui-ci de manière telle que le système de pinces (10) puisse se déplacer entre les moyens de réception d'outils et au moins une position de transfert d'outils pour prélever et ramener des outils (3), **caractérisée** par le fait que les outils (3) sont tenus par la tête d'usinage dans les moyens de réception (4) de telle sorte qu'ils pendent vers le bas et par le fait qu'il est prévu au-dessous des moyens de réception (4) des outils de l'unité support (18) concernée une tôle de protection contre les égouttures.

2. Combinaison selon la revendication 1, **caractérisée** par le fait que le support de base (1) se compose d'un cadre (17) avec des montants verticaux et des traverses horizontales dans lequel les unités supports (18) sont fixées dans une position précise et peuvent être remplacées de manière modulaire.

3. Combinaison selon la revendication 1 ou 2, **caractérisée** par le fait que le support de base (1) en forme de cadre est conçu de manière à pouvoir être remplacé en tant qu'ensemble et, à cet effet, est monté dans des glissières par ses parties horizontales.

4. Combinaison selon l'une des revendications précédentes, **caractérisée** par le fait qu'il est prévu deux supports de base (1) équipés d'unités supports (18) parallèles disposés à distance l'un de l'autre et par le fait que le dispositif de transport (9) peut se déplacer entre ces deux supports de base, une pince double ou une pince pouvant pivoter d'au moins 180° étant prévue comme système de pinces.

5. Combinaison selon l'une des revendications précédentes, **caractérisée** par le fait que le support de base (1) est formé d'un cadre (17) en forme de C sur les traverses horizontales duquel le dispositif de transport (9) est monté de manière à pouvoir être déplacé et sur les montants (17) verticaux duquel sont fixées des glissières (25) aux fins de recevoir des cassettes (24) porte-outils.

6. Combinaison selon la revendication 5, **caractérisée** par le fait que chaque cassette (24) porte-outils est formée par pliage à partir de bande de tôle continue, présente en coupe verticale une forme extérieure en C et que les porte-outils (4) sont aménagés dans une partie terminale de la tôle qui, par rapport à la cassette, est située sensiblement au milieu et s'étend horizontalement.

7. Combinaison selon l'une des revendications 5 ou 6, **caractérisée** par le fait que chaque cassette porte-outils (24) est supportée par des éléments de roulement et/ou de glissement par rapport aux glissières (25) qui lui sont associées et peut notamment être réglées au moyen de ces éléments.

8. Combinaison selon l'une des revendications précédentes, **caractérisée** par le fait qu'un poste de contrôle d'outils occupant une position fixe définie est intégré dans la structure d'étagères, en particulier dans la zone de transfert d'outils, station dans laquelle, des capteurs stationnaires déterminent au moins la longueur de l'outil concerné lorsque celui-ci est déplacé par le dispositif de transport (9).

9. Combinaison selon l'une des revendications précédentes, **caractérisée** par le fait qu'un poste de charge occupant une position fixe pour des appareils de mesure ou de contrôle équipés d'accumulateurs, tels que par exemple des comparateurs, est intégré à la structure d'étagères et par le fait que les appareils de mesure ou de contrôle dans leur position tenue par les moyens de réception (4) sont couplés à un circuit électrique de charge.

10. Combinaison selon l'une des revendications 5 à 9, **caractérisée** par le fait que les cassettes porte-outils (24) peuvent être amenées par déplacement horizontal, notamment par l'intermédiaire du dispositif de transport (9), dans des glissières réceptrices adaptées d'un chariot élévateur mobile et remisable et par le fait que les glissières réceptrices du chariot élévateur peuvent se déplacer verticalement et être amenées dans l'alignement des glissières (25) du support de base (1).

11. Combinaison selon l'une des revendications précédentes, **caractérisée** par le fait qu'au moins une partie prédéterminée du support de base (1) est réservée à des unités supports (18) pour des outils (3) usés ainsi que pour des outils (3) devant être admis ou rejetés, cette zone étant prévue de préférence à l'extrémité du support de base (1) éloignée de la zone de transfert d'outils.

12. Combinaison selon la revendication 11, **caractérisée** par le fait que des unités supports (18) individuelles pour des outils usés, à admettre ou à évacuer sont disposées l'une au-dessus de l'autre dans l'angle inférieur du support de base (1) éloigné de la zone d'échange d'outils et, en tant que sous-ensembles en forme d'étagères sont agencées de manière à pouvoir être mises en place et dégagées ou de manière à pouvoir pivoter.

13. Combinaison selon l'une des revendications précédentes, **caractérisée** par le fait que le support de base (1) est formé de plusieurs ensembles individuels et est composé et assemblé en fonction de la taille totale souhaitée grâce à des liaisons enfichables et verrouillables démontables.

14. Combinaison selon l'une des revendications précédentes, **caractérisée** par le fait que le support de base (1) est monté sur des galets ou sur des roues (6), est guidé dans des rails (7) fixes et peut être immobilisé dans une position prédéterminée au moyen de butées (8) ou analogues et par le fait que le support de base (1), par l'intermédiaire d'un dispositif d'attache (15, 16) peut être couplé à un organe (21) de la machine d'usinage correspondante et déplacé en synchronisme avec celui-ci.

15. Combinaison selon l'une des revendications précédentes, **caractérisée** par le fait que les moyens de réception (4) pour les outils (3), tête de mesure et analogues comportent notamment des éléments de réception et de positionnement en matière plastique qui sont constitués par des pièces en matière plastique en forme de fer à cheval qui s'encliquettent sur l'unité support (18) dans la zone de chacun des évidements en forme de fer à cheval.
